# NOUVEAU FASCICULE DE BREVET EUROPEEN

(11) **EP 1 000 375 B2**
(45) Date de publication et mention de la décision concernant l'opposition: **27.06.2007**
(45) Mention de la délivrance du brevet: 03.04.2002
(21) Numéro de dépôt: 98941474.3
(22) Date de dépôt: 28.07.1998
(51) Int. Cl.: G02B 17/06

(54) **DISPOSITIF OPTIQUE POUR VISEUR DE CASQUE COMPORTANT UN MIROIR ASPHERIQUE**
MIT EINEM ASPHÄRISCHEN SPIEGEL AUSGERÜSTETE OPTISCHE VORRICHTUNG FÜR HELMVISIER
OPTICAL DEVICE FOR HELMET VISOR COMPRISING ASPHERIC MIRROR

(30) Priorité: 01.08.1997 FR 9709893
(43) Date de publication de la demande: 17.05.2000
(73) Titulaire: THALES AVIONICS S.A., 78141 Vélizy Villacoublay Cédex (FR)
(72) Inventeur: BIGNOLLES, Laurent, Thomson-CSF Propriété Intel., F-94117 Arcueil Cedex (FR); POTIN, Laurent, Thomson-CSF Propriété Intel., F-94117 Arcueil Cedex (FR)
(74) Mandataire: Esselin, Sophie
(86) Numéro de dépôt international: PCT/FR1998/001673
(87) Numéro de publication internationale: WO 1999/006867

(56) Documents cités:
- EP-A- 0 380 035
- EP-A- 0 531 121
- EP-A- 0 790 516
- CH-A- 131 850
- DE-A- 3 513 672
- DE-A- 3 717 906
- DE-A- 19 535 969
- FR-A- 2 692 368
- FR-A- 2 692 369
- GB-A- 2 305 573
- US-A- 4 084 887
- US-A- 5 293 271
- US-A- 5 485 306
- US-A- 5 598 263

## Description

La présente invention concerne un dispositif optique de correction de l'image de la pupille de l'oeil donnée par un miroir concave sphérique. Plus précisément, un dispositif selon l'invention permet d'observer une image qui est corrigée de distorsion due à un miroir concave sphérique, ou sensiblement sphérique, incliné par rapport à la direction sous laquelle l'oeil observe ce miroir.

L'invention s'applique à un viseur de casque notamment, mais non exclusivement, pour pilote d'avion ou d'hélicoptères d'armes ou pour opérateur d'un simulateur d'entraînement.

Un viseur de casque est un dispositif de présentation d'images intégré à un casque. Le viseur permet au porteur du casque, comme par exemple un pilote d'avion en vol, d'observer des informations visuelles simultanément à la vue du paysage, ou du poste de pilotage, qu'il perçoit le plus souvent à travers une visière de protection.

La présentation d'informations adaptées, par exemple sous forme de symboles, permet une aide au pilotage et à la navigation. Ainsi pour des véhicules armés la présentation d'un réticule réalise une aide à la visée d'une arme.

Les informations peuvent aussi consister en une image du paysage acquise par des capteurs différents de l'oeil du porteur du casque comme des capteurs infrarouge ou des intensificateurs de lumière visible pour compléter ou remplacer la vue directe.

A l'intérieur du casque, un générateur d'image comporte un imageur comme par exemple un écran de tube cathodique ou un écran à cristaux liquides sur l'écran duquel une image est formée.

Le casque comporte le plus souvent une optique de relais pour transporter cette image jusqu'à un combineur qui assure une présentation de l'image transportée en superposition à la vue du paysage.

Pour une observation simultanée par le pilote du paysage qui est vu directement à l'infini, et de l'image de l'imageur, cette dernière est aussi focalisée à l'infini par une optique de collimation.

Lorsque le combineur est formé d'une simple lame plane semi-réfléchissante, la collimation de l'image peut être réalisée par une optique placée entre le combineur et l'imageur; une telle réalisation de l'art antérieur présente l'inconvénient principal de nécessiter une optique de collimation trop encombrante relativement au champ de vue restreint procuré.

Pour réduire l'encombrement, un combineur présentant une puissance optique a été proposé ; un tel combineur réalise pour son utilisateur à la fois la collimation de l'image et la superposition de l'image collimatée avec la vue du paysage.

L'art antérieur est riche de dispositifs nombreux et variés comportant un combineur à puissance optique. Tout d'abord un miroir sphérique concave réalise une collimation de qualité moyenne d'une image placée en un point particulier de l'espace situé sur l'axe du miroir et à une distance de celui-ci égale à la moitié de son rayon de courbure. En plaçant un imageur en ce point, l'oeil situé sur l'axe du miroir reçoit des rayons issus de l'imageur après leur réflexion sur le miroir sphérique, ces rayons sont parallèles et conduisent à la perception par l'oeil d'une image collimatée. Si de plus le miroir est semi-réfléchissant, il permet au même oeil d'observer le paysage par transparence. Cependant dans un tel dispositif l'imageur se trouve sur l'axe du miroir sphérique semi-transparent et il masque le champ de vue de l'utilisateur.

Pour dégager la vue de l'utilisateur, le miroir sphérique peut être incliné par rapport à la normale au visage et l'oeil de l'utilisateur n'est plus sur l'axe du miroir. Cette inclinaison présente l'inconvénient majeur de conduire à une image collimatée affectée d'aberrations optiques, d'excentrement en particulier, limitant trop fortement l'exploitation d'un tel dispositif. Il est notamment connu une solution de ce type dans le document intitulé "Visor Projected display using a spherical combiner, extrait de doc of SPIE, Vol 1988 de Pinhas Gilboa, cette solution décrit un viseur de casque fonctionnant et un angle de vue limité à 20 degrés.

Pour ne pas masquer le champ de vue de l'utilisateur tout en limitant les aberrations, l'art antérieur nous enseigne l'usage d'un miroir parabolique au lieu d'un miroir sphérique. L'imageur est placé au foyer du paraboloïde décrit par le miroir et l'oeil observe le miroir selon une parallèle à l'axe de révolution du paraboloïde.

L'image collimatée perçue par l'oeil est dépourvue d'aberration sphérique mais reste principalement affectée d'une coma très pénalisante, dont l'importance augmente rapidement avec le champ. Ainsi l'imageur, tout en étant hors de l'axe du champ de vue, reste gênant dans le champ de vue.

Un perfectionnement consiste à exploiter une double réflexion sur le miroir parabolique avec un miroir plan intermédiaire placé au niveau du front de l'utilisateur et appelé miroir de renvoi. Les deux réflexions se situent de par et d'autre de l'axe du paraboloïde, elles permettant d'obtenir une image collimatée affranchie de coma et dont les autres aberrations restent acceptables pour un champ de vue encore assez restreint.

La volonté de réduire la gêne due au miroir de renvoi a conduit à une évolution de l'état de l'art. Un dispositif exploitant un miroir parabolique et une double réflexion présentant une asymétrie par rapport à l'axe de celui-ci a été décrit. S'il réduit la gêne dans le champ de vue, ce dispositif augmente les aberrations, en particulier l'astigmatisme. Le dispositif décrit comporte des lentilles inclinées pour réduire l'astigmatisme, il comporte également une lentille de champ pour compenser la courbure de champ et compense la distorsion par une déformation de l'image lors de sa génération : l'image est formée sur l'écran du tube cathodique de l'imageur avec une distorsion inverse de celle qu'elle est contrainte à subir en traversant le dispositif optique.

Par ailleurs l'idée initiale de collimation par un miroir sphérique a subi de nouveaux développements ; est ainsi décrit un dispositif avec miroir sphérique semi-transparent d'axe incliné, comprenant un prisme pour compenser les aberrations induites inévitables.

Le prisme est placé sur le trajet des rayons lumineux entre l'imageur et le miroir sphérique. Les aberrations sont minimisées dans leur ensemble en adaptant l'inclinaison et l'ouverture du prisme. Et l'astigmatisme est corrigé par un élément optique supplémentaire qui doit être cylindrique.

Ce dispositif est essentiellement pénalisé par un faible champ.

Parallèlement des dispositifs à miroir sphérique sans inclinaison avec l'axe de vue et avec déport de l'imageur ont été réalisés.

Un tel dispositif comprend un miroir plan semi-réfléchissant placé entre le miroir sphérique et l'oeil de l'utilisateur, au niveau du foyer de collimation du miroir sphérique.

De l'imageur à l'oeil de l'utilisateur, un rayon lumineux suit un trajet optique où, successivement, il frappe une première fois le miroir plan semi-réfléchissant, il est réfléchi sur celui-ci en direction du miroir sphérique, il est alors réfléchi sur ce dernier pour être renvoyé vers le miroir plan, il frappe une seconde fois le miroir plan et le traverse pour rejoindre l'oeil.

L'ensemble des miroirs sphérique et plan est transparent pour les rayons émis par le paysage.

Ce type de dispositif présente une image collimatée de bonne qualité.

Cependant cette conception, impliquant un compromis entre la réflexion et la transmission par le miroir plan, présente l'inconvénient de ne transmettre à l'oeil qu'une faible partie de l'intensité lumineuse initiale et ainsi de limiter trop sévèrement les conditions d'utilisation d'un viseur de casque équipé de ce dispositif.

L'amélioration de la transmission à l'oeil de l'image utile est possible en inclinant légèrement la visière sphérique par rapport à l'axe de vue de l'utilisateur et en réalisant sur le miroir plan un traitement anti-réfléchissant sélectif en fonction de l'angle d'incidence des rayons lumineux.

Avec cette géométrie, les première et seconde incidences d'un même rayon lumineux sur le miroir plan présentent des valeurs angulaires distinctes qui permettent au traitement anti-réfléchissant sélectif, en s'affranchissant du compromis classique entre la réflexion et la transmission d'un rayon qui pénalise le dispositif précédent, de favoriser conjointement la réflexion du rayon initial et la transmission du rayon déjà réfléchi.

Ce dispositif présente un champ de vue assez large mais il est affecté d'aberrations dues à l'inclinaison de l'axe du miroir sphérique. Certaines aberrations sont corrigées par une lentille de champ inclinée et par des lentilles sphériques.

L'astigmatisme et la distorsion ne sont pas excessifs car l'inclinaison est faible mais ne sont pas corrigés optiquement. Seule une compensation de la distorsion par une déformation de l'image générée sur l'écran cathodique est envisagée.

Ce dispositif présente une luminosité améliorée, cependant la présence du miroir plan entre l'oeil et le miroir sphérique le plus souvent intégré à la visière du casque est un inconvénient majeur si ce n'est pour le confort, pour la sécurité de l'oeil d'une part et pour le coût élevé de son traitement anti-réfléchissant d'autre part.

Le problème consiste à réaliser un dispositif de présentation d'images pour casque avec visière sphérique sans élément interposé entre l'oeil et la visière et présentant une image collimatée satisfaisante pour l'utilisateur c'est-à-dire dépourvue d'aberrations gênantes et présentant un grand champ de vue supérieur ou égal à 40 degrés.

L'utilisation d'une partie sphérique de la visière comme élément de collimation conduit à de fortes aberrations qu'il est nécessaire de corriger au moins partiellement.

C'est pourquoi l'invention propose un dispositif optique selon la revendication 1.

Les rayons lumineux issus du centre de l'imageur forment le champ central de l'imageur. L'axe optique du dispositif correspond au trajet du rayon du champ central qui passe par le centre de la pupille de l'utilisateur.

L'axe optique est le plus souvent une ligne brisée. Par exemple, si l'image est présentée à l'utilisateur droit devant lui, la partie de l'axe optique située entre l'oeil et le miroir sphérique est supportée par une première droite normale au centre de la pupille de l'utilisateur, l'axe optique présente une cassure au niveau de l'intersection de cette première droite avec le miroir sphérique, et l'image que le miroir sphérique donne de cette première droite supporte le segment suivant de l'axe optique.

Le miroir concave asphérique placé entre le miroir sphérique et l'imageur est incliné par rapport à l'axe optique. La surface du miroir concave asphérique est de préférence une surface du second ordre ou quadratique.

Si l'invention est présentée sans miroir de pliage, il est toujours possible, après le positionnement théorique des divers éléments optiques de l'invention, d'ajouter un ou plusieurs miroirs plans qui n'apportent pas d'aberration mais permettent de satisfaire des contraintes d'encombrement par exemple pour que le dispositif soit adapté au contour de la tète de l'utilisateur. Une optique présentée sans miroir de pliage est appelée optique dépliée.

Le plan de symétrie de l'optique dépliée contient la normale à la pupille de l'entrée de l'oeil de l'utilisateur et le centre du miroir sphérique.

L'intersection de ce plan avec le miroir concave asphérique est une courbe plane à rayon de courbure variable comme une conique non dégénérée. La surface du miroir concave asphérique permet de corriger la distorsion de l'image présentée à l'utilisateur qui est due au miroir sphérique hors axe.

Dans une réalisation de l'invention, la surface optique du miroir concave asphérique incliné est supportée par un paraboloïde. Dans une autre réalisation, la surface concave asphérique s'appuie sur un ellipsoïde.

La surface du miroir concave asphérique est de préférence une partie d'une surface de révolution. Elle présente dans ce cas l'avantage d'une réalisation plus aisée.

L'axe de révolution du miroir concave asphérique est situé dans le plan de symétrie de l'optique dépliée.

L'image de la pupille de l'oeil hors axe est la première image pupillaire du dispositif, elle est inclinée par rapport à l'axe optique. De cette première image pupillaire inclinée, le miroir asphérique selon l'invention donne une seconde image pupillaire redressée sur l'axe optique.

Dans le cas d'un paraboloïde de révolution, l'axe de révolution du miroir concave asphérique est sensiblement parallèle à la normale à la première image pupillaire.

Le dispositif comporte également une lentille de puissance sensiblement centrée et placée entre le miroir sphérique et le miroir concave asphérique.

Lorsque la surface du miroir concave asphérique est décrite par un paraboloïde, la lentille de puissance conjugue l'image de la pupille de l'oeil de l'utilisateur, donnée par le miroir sphérique, au voisinage du foyer de conjugaison du paraboloïde.

L'ellipsoïde présente l'avantage de posséder deux foyers à distance finie. Une telle surface est moins facile à usiner qu'un paraboloïde mais elle corrige mieux car le miroir ellipsoïdal est complètement stigmatique pour ses deux foyers et assure une bonne conjugaison des voisinages des foyers.

L'invention présente l'avantage de corriger la distorsion de l'image présentée à l'oeil de l'utilisateur pour une pupille instrumentale large, par exemple d'au moins 15 millimètres de diamètre, et pour un champ large typiquement supérieur à 40 degrés. La pupille instrumentale est la zone de l'espace dans laquelle l'utilisateur de l'instrument doit placer la pupille de son oeil pour utiliser l'instrument.

Cette correction est particulièrement intéressante lorsqu'une. distorsion ne peut pas être imposée facilement au niveau de l'imageur. En effet l'art antérieur nous enseigne pour corriger la distorsion de l'image fournie par un ensemble optique d'introduire une distorsion inverse au niveau de l'imageur par correction électronique ; ceci est aisément réalisé lorsque l'imageur comporte un tube cathodique mais cette solution n'est pas adaptée à un imageur, comme par exemple un intensificateur de lumière, qui ne présente pas les réglages nécessaires de l'image.

L'invention peut être intégrée à un viseur de casque présentant une pupille instrumentale large et un champ large.

D'autres caractéristiques et avantages de l'invention apparaîtront à la lecture de la description détaillée suivante d'une réalisation particulière qui est faite en référence aux dessins annexés suivants dans lesquels les schémas optiques sont représentés dépliés c'est-à-dire sans miroir plan.
- la figure 1 représente schématiquement et partiellement un dispositif optique avec miroir combineur sphérique hors axe optique,
- la figure 2 représente un dispositif déplié selon l'invention,
- la figure 3 représente un dispositif selon l'invention avec un miroir parabolique et une optique de relais,
- la figure 4 représente un dispositif selon l'invention avec un miroir ellipsoïdal et une optique de relais,
- la figure 5 représente la distorsion que l'invention corrige.

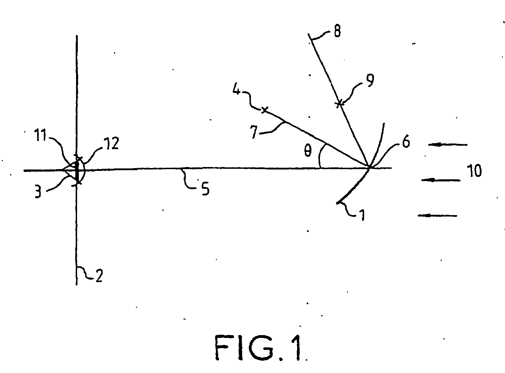

Sur la figure 1, l'oeil 3 de l'utilisateur observe un miroir sphérique 1. Dans la position d'observation, le plan pupillaire 2 contient la pupille 11 de l'oeil, laquelle est généralement située à 3 millimètres en retrait de la cornée 12 de l'oeil 3.

Une droite 5 passant par le centre de la pupille de l'oeil 3 et est, par exemple, normale au plan pupillaire 2. On note qu'en fonction de son orientation par rapport au visage de l'utilisateur, la droite 5 peut correspondre à la vue de l'utilisateur droit devant lui, ou bien à une vue vers le haut, vers le bas , vers un côté ou le côté opposé.

Le miroir sphérique 1 est placé en avant de l'utilisateur, sa concavité est tournée vers l'utilisateur et la surface de ce miroir est au voisinage de son point d'intersection 6 avec la droite 5.

Le miroir sphérique 1 est supporté par une sphère S dont le centre 4 n'appartient pas à cette droite 5. Le plan de la figure 1 est un plan de l'espace qui contient le centre de la sphère support du miroir sphérique 1 et la droite 5 passant par le centre de la pupille de l'oeil 3. C'est le plan d'incidence de la droite 5 sur le miroir sphérique 1. Le plus souvent ce plan est confondu avec le plan passant par le centre de la pupille 11 et parallèle au plan de symétrie théorique du visage de l'utilisateur.

Le rayon 7 de la sphère S qui passe par le point d'intersection 6 est écarté de la droite 5 d'un angle θ. Une valeur non nulle de cet angle θ caractérise une utilisation hors axe du miroir sphérique 1. Le miroir sphérique 1 lui-même est dit "hors axe".

On s'intéresse à un rayon optique 8 qui est symétrique de la droite 5 de l'axe optique par rapport au rayon 7 décrit de la sphère. En première approximation, une image 9 placée sur ce rayon optique 8 à une distance égale à la moitié du rayon de courbure de la sphère est perçue par l'oeil 3 de l'utilisateur comme collimatée au premier ordre car les rayons lumineux issus de l'image 9 ainsi placée sont réfléchis par le miroir sphérique 1 en direction de l'oeil 3 sous la forme d'un faisceau de rayons sensiblement parallèles. L'image 9 peut être plane ou présenter de la courbure de champ. Le plan tangent à l'image 9 est de préférence perpendiculaire au rayon optique 8.

Cependant la collimation par réflexion sur le miroir sphérique n'est pas parfaite, elle est affectée d'aberration sphérique, de coma, d'astigmatisme, de courbure de champ et de distorsion mais aussi d'aberration optique d'excentrement due au miroir sphérique 1 hors axe. Divers éléments optiques vont être décrits afin d'obtenir à partir d'une image lumineuse, fournie par un imageur, la perception par l'oeil de l'utilisateur d'une image collimatée de bonne qualité.

Le miroir sphérique 1 peut-être semi-transparent. Dans ce cas des rayons lumineux 10 provenant de l'environnement extérieur au miroir sphérique 1, c'est-à-dire venant frapper la face convexe de ce miroir, sont transmis à l'oeil 3 par le miroir sphérique 1. Ce miroir sphérique 1 réalise alors un combineur qui superpose une image collimatée avec la vue directe de l'environnement.

Le champ central est défini comme le faisceau des rayons lumineux issus d'un point particulier de l'image 9 qui est le centre de cette image. On considère un rayon lumineux particulier qui appartient au champ central et qui passe par le centre de la pupille de l'utilisateur. Le trajet de ce rayon lumineux est l'axe optique du dispositif utilisé. L'axe optique est généralement une ligne brisée. La droite 5 supporte une partie de l'axe optique. Le plus souvent, l'image est présentée droit devant l'utilisateur, la droite 5 est alors sensiblement normale au visage de l'utilisateur, mais l'image peut être par exemple présentée en haut du champ de vision de repos à l'infini de l'utilisateur et la droite 5 est alors orientée dans la direction correspondante.

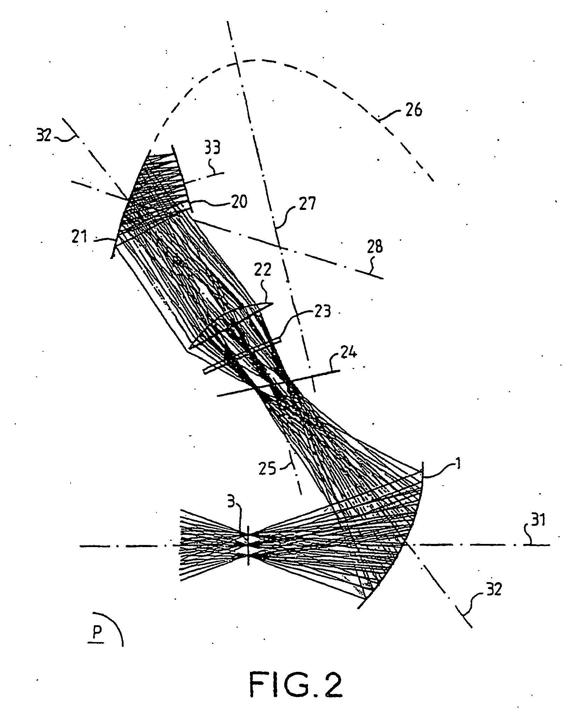

Sur la figure 2, des trajets de rayons lumineux à l'intérieur d'une réalisation d'un dispositif selon l'invention sont représentés.

Dans cette réalisation, l'imageur, non représenté, comporte par exemple un tube cathodique ou un écran à cristaux liquides. L'écran peut aussi être réalisé par exemple par une section de faisceau de fibres optiques ou une diapositive ou l'écran d'un tube intensificateur de lumière. Une image dont la surface est quelconque est affichée sur l'écran de l'imageur représenté par son plan tangent 20. Par exemple si l'image est plane, elle est contenue dans le plan tangent 20. Par la suite, pour simplifier, le plan 20 désigne indifféremment l'écran de l'imageur ou son plan tangent. Le trajet des rayons lumineux de l'écran de l'imageur jusqu'à l'oeil 3 de l'utilisateur sont tracés pour cette réalisation de l'invention. L'oeil 3 de l'utilisateur est représenté par sa pupille qui porte la même référence pour simplifier les figures.

Le dispositif comprend un miroir sphérique 1 hors axe et un miroir concave asphérique 21. Il comprend également une lentille de puissance 22 située entre ces deux miroirs 1 et 21.

Dans cette réalisation, le dispositif optique comporte une lentille diffractive 23 entre la lentille de puissance 22 et le miroir sphérique 1.

Les rayons lumineux issus de l'écran 20 de l'imageur frappent le miroir concave ashérique 21.

Les rayons lumineux réfléchis par le miroir concave asphérique 21 traversent la lentille de puissance 22 et la lentille diffractive 23 avant de frapper le miroir sphérique 1 hors axe qui assure une collimation de l'image reçue par l'oeil 3 de l'utilisateur.

On observe maintenant le trajet des rayons lumineux dans l'autre sens c'est-à-dire en partant de l'oeil 3 de l'utilisateur et en remontant les différents éléments optiques vers l'écran de l'afficheur. Les rayons sont réfléchis par le miroir sphérique 1 hors axe, le rayon particulier qu'est l'axe optique est aussi réfléchi sur le miroir sphérique 1.

Dans une première partie 31 entre le centre de la pupille de l'oeil 3 et le miroir sphérique 1, l'axe optique est supporté par une droite 31 qui, sur la figure 2, est horizontale. Ce rayon optique est réfléchi par le miroir sphérique 1 en une seconde partie 32 de l'axe optique.

Le plan d'incidence de l'axe optique sur le miroir sphérique 1 est le plan contenant les première et seconde parties 31 et 32 de l'axe optique. C'est le plan P de la figure 2.

Sur la seconde partie 32 de l'axe optique on observe une première image pupillaire 24 qui est l'image de la pupille de l'oeil 3 donnée par le miroir shérique 1 hors axe. La normale 25 au plan tangent à cette première image pupillaire 24 ne présente pas la même direction que la section 32 de l'axe optique correspondante. La première image pupillaire 24 est inclinée sur l'axe optique.

La lentille de puissance 22 est de préférence centrée sur cette seconde partie 32 de l'axe optique. La lentille de puissance 22 est placée par exemple de façon à ce que la première image pupillaire 24 soit sur le trajet des rayons lumineux entre le miroir shérique 1 et la lentille de puissance 22. L'ensemble de la lentille de puissance 22 et de la lentille diffractive 23 forme un groupe de puissance qui permet de corriger les aberrations résiduelles de l'image. Le groupe de puissance permet au dispositif optique selon l'invention de présenter une bonne qualité d'image. Ce groupe de puissance est un élément optique proche de la première image pupillaire 24, il affecte très peu l'image pupillaire 24.

Le miroir concave asphérique est placé au voisinage de la seconde partie 32 de l'axe optique, pour être sur le trajet des rayons qui viennent de la pupille de l'oeil 1 - car la description est ici écrite en remontant le trajet réél des rayons lumineux issus de l'écran de l'imageur- et réfléchir ces rayons vers l'écran 20 de l'imageur.

La partie utile du miroir asphérique 21 présente un plan tangent dont la normale 28 n'est pas parallèle à la seconde partie 32 de l'axe optique. Le miroir asphérique 21 est dit incliné par rapport à cet axe.

Dans le plan P d'incidence de l'axe optique sur le miroir sphérique 1 qui est défini par les deux premières parties de l'axe optique 31 et 32, le miroir asphérique 21 présente un rayon de courbure variable.

Le dispositif selon l'invention représenté sur la figure 2 est exempt de miroir de pliage, c'est-à-dire qu'il est présenté sans aucun miroir plan. En effet les miroirs plans ne modifient pas la fonction optique, ils n'apportent pas et ne corrigent pas d'aberration mais ils permettent aux rayons optiques de contourner des obstacles comme la tête de l'utilisateur. Ils ne sont pas nécessaires à la description de l'invention.

Le plan P est le plan de la figure 2, c'est aussi le plan de symétrie de l'optique présentée sur cette figure. Le plan P de la figure 2 est le plan d'incidence de l'axe optique sur le miroir concave asphérique 21. L'intersection de la surface optique du miroir asphérique 21 avec ce plan P est une courbe plane qui présente un rayon de courbure en chacun de ses points. En se déplaçant le long de la courbe, la valeur du rayon de courbure varie. La valeur du rayon de courbure n'est pas constante et selon le sens de déplacement, cette valeur croît ou bien décroît. On dit que la variation du rayon de courbure le long de cette courbe est monotone. Une exemple ayant une expression mathématique simple d'une telle courbe est une partie d'une conique non dégénérée. La conique est par exemple une parabole ou une ellipse.

La forme de la surface concave du miroir asphérique 21 est telle que l'ensemble du dispositif assure une correction des aberrations sur l'image présentée à l'utilisateur qui sont dues au miroir sphérique hors axe.

Le miroir asphérique 21 corrige les aberrations résiduelles de l'image pupillaire donnée par le miroir sphérique 1 de la pupille de l'oeil 3, il est placé à proximité de l'image de l'écran 20 et n'affecte donc que peu cette image. Le miroir asphérique 21 permet au dispositif optique selon l'invention de présenter une bonne qualité de pupille. Le miroir asphérique 21 agit peu sur la qualité de l'image mais il agit beaucoup sur la qualité de la pupille.

Une surface géométrique du second ordre ou quadrique décrit la surface optique du miroir asphérique 21. Une telle surface présente l'avantage d'être relativement facilement modélisée car elle peut s'exprimer dans un repère adéquat sous la forme d'un polynôme du second degré.

La surface géométrique supportant la surface optique du miroir asphérique 21 est par exemple un paraboloïde ou un ellipsoïde.

La surface géométrique est de préférence une surface de révolution. Elle présente alors l'avantage d'être assez facile à fabriquer. Pour les exemples de paraboloïde et d'ellipsoïde, on peut alors parler de miroir respectivement parabolique et ellipsoïdal.

L'axe de révolution est de préférence dans le plan P de la figure 2 ou plan de symétrie de l'optique dépliée. L'orientation de l'axe de révolution est telle que le miroir asphérique 21 compense l'inclinaison observée de l'image pupillaire 24 que le miroir sphérique 1 introduit dans le dispositif optique.

Dans la réalisation de la figure 2, la surface géométrique est un paraboloïde de révolution dont l'intersection avec le plan de la figure 2 est une parabole 26. L'axe de révolution est confondu avec l'axe 27 de la parabole 26. L'axe de révolution est de'préférence dirigé selon la direction de la droite 25 normale au plan tangent de la première image pupillaire 24 donnée par le miroir sphérique 1 de la pupille de l'oeil 3 de l'utilisateur.

L'axe 27 et la droite 28 du plan P de la figure 2 qui est normale au centre du miroir asphérique 21 ne sont pas parallèles; leurs orientations sont sensiblement différentes. Le miroir asphérique 21 correspond à une partie décentrée d'un miroir parabolique car la surface utile du paraboloïde n'est pas au voisinage immédiat du sommet de la parabole 26.

L'ouverture autour de l'axe 28 est suffisante pour optimiser le tirage laissé disponible pour placer par exemple des miroirs de renvoi entre le miroir asphérique 21 et la lentille 22. Et l'angle d'incidence de l'axe optique sur le miroir asphérique 21 permet aussi de limiter la surface utile et ainsi de conserver une bonne qualité d'image sur toute la surface. L'angle d'incidence est de préférence voisin de 45 degrés. Dans cette réalisation, la surface utile du miroir 21 est par exemple estimée par un diamètre d'environ 45 millimètres.

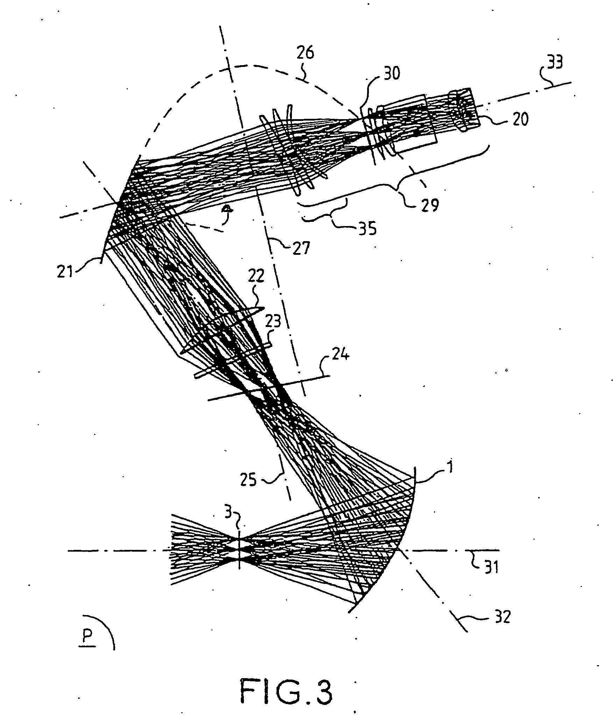

Sur la figure 3, un dispositif optique selon l'invention comporte une optique relais 29 pour éloigner l'écran 20 de l'imageur du miroir asphérique 21. Cet éloignement est généralement rendu nécessaire pour satisfaire des contraintes d'encombrement. Il permet par exemple pour un viseur de casque de placer l'ensemble de l'imageur, qui peut être un tube à rayons cathodiques, à une position satisfaisante dans le volume disponible du casque.

Sur la figure 3, on voit la troisième partie 33 de l'axe optique qui correspond à la réflexion de la seconde partie 32 de ce même axe optique sur le miroir asphérique 21. L'optique de relais 29 est placée entre le miroir concave asphérique 21 et l'écran 20 de l'imageur, elle est sensiblement alignée avec la troisième partie 33 de l'axe optique. Cette optique de relais essentiellement centrée est simple à réaliser.

Une seconde image pupillaire 30 peut être observée sur la partie 33 de l'axe optique, cette image est située entre le miroir asphérique 21 et l'écran de l'imageur 20. Cette seconde image pupiliaire 30 est vue par le miroir asphérique 21 à travers un groupe 35 de lentilles appartenant à l'optique de relais 29.

Le paraboloïde de révolution possède deux foyers, l'un à l'infini et l'autre à une distance finie de son sommet. Le miroir asphérique 21 est placé de préférence de façon à ce que les images pupillaires 24, 30 soient perçues par le miroir asphérique 21, à travers respectivement le groupe de puissance 22, 23 et les lentilles 35, comme situées au niveau de ses foyers; la première image pupillaire 24 correspondant au foyer à l'infini. On dit que la première image 24 de la pupille de l'oeil de l'utilisateur donnée par le miroir sphérique 1 est vue par le miroir asphérique 21 à travers le groupe de puissance 22, 23 de façon conjuguée.

Plus précisément, l'image pupillaire 24 n'est pas tout à fait placée optiquement à l'infini par rapport au miroir parabolique 21 car cela conduirait à une dimension trop importante de la lentille de puissance 22. La réalisation ici décrite à titre d'exemple correspond à un éloignement optique suffisant entre le miroir asphérique 21 et la première image pupillaire 24.

D'autre part, le grandissement entre les deux images pupillaires 30 et 24 est de préférence d'une valeur proche de un. La conjugaison pupillaire pratiquement unitaire présente l'avantage de réduire l'encombrement du dispositif optique, elle permet une minimisation de la taille des optiques tout au long du chemin optique. Cette réduction d'encombrement est avantageuse pour le poids du dispositif et pour son coût.

L'image pupillaire 30 présente un plan tangent qui est sensiblement normal à l'axe optique 33 local: c'est une correction apportée par le miroir asphérique 21. En effet, la première image 24 de la pupille de l'oeil formée par le miroir sphérique 1 est inclinée par rapport à l'axe optique local 32 et correspond aux aberrations induites par ce miroir 1; et la seconde image pupillaire 30 est redressée par rapport à l'axe optique 33 par le miroir ashérique 21.

La surface du miroir asphérique 21 est telle que ce miroir 21 redresse l'image pupillaire par rapport à l'axe optique. Ce redressement permet de compenser la distorsion introduite par le miroir shérique 1 hors axe. Ce redressement de l'image pupillaire correspond à la correction de l'aberration sphérique pupillaire, il réduit la distorsion de l'image observée par l'utilisateur d'un dispositif selon l'invention.

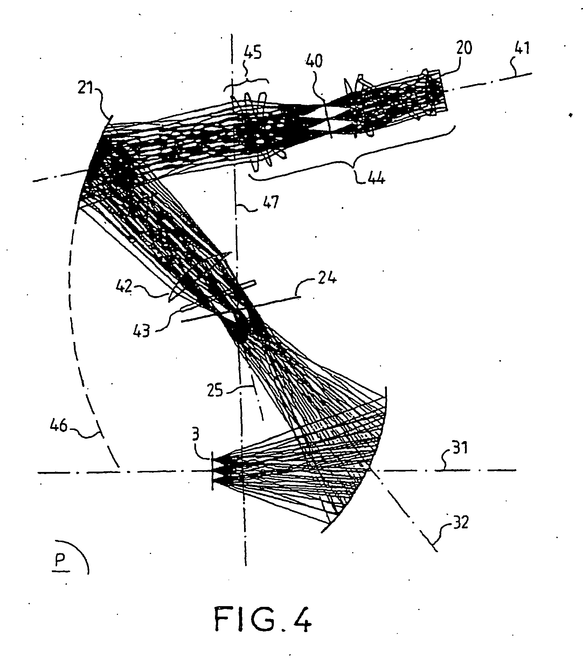

Sur la figure 4, le schéma optique - déplié - d'un dispositif selon l'invention avec une optique de relais est représenté. Cette réalisation de l'invention se distingue de celle décrite à l'aide des figures 2 et 3 car le miroir asphérique 21 présente ici une surface géométrique dont l'intersection avec le plan P de symétrie de l'optique dépliée, ou plan d'incidence de l'axe optique, est supportée par une ellipse 46.

Un groupe de puissance comportant au moins une lentille de puissance 42 et une lentille diffractive 43 est placé entre la première image pupillaire 24 et le miroir asphérique 21. Dans cette réalisation, comme dans celle représentée sur la figure précédente, une optique de relais 44 éloigne le plan 20 tangent à l'imageur du miroir asphérique 21. On observe une seconde image pupillaire 40 qui est vue par le miroir asphérique 21 à travers un groupe de lentilles 45.

La surface du miroir 21 est une partie d'un ellipsoïde. Le plus souvent cette surface présente une symétrie de révolution. L'axe de révolution 47 est de préférence situé dans le plan P d'incidence de l'axe optique.

L'axe de révolution de l'ellipsoïde confondu avec un des axes principaux de l'ellipse 46 définit un miroir ellipsoïdal.

L'axe de révolution 47 est que le miroir asphérique 21 transforme la première image pupillaire 24 inclinée sur l'axe optique 32 en une seconde image pupillaire 40 sensiblement perpendiculaire à l'axe optique 41 sur laquelle elle est située.

Le miroir asphérique 21 voit la première image pupillaire 24 par l'intermédiaire du groupe de puissance 42, 43 et il voit la seconde image pupillaire 40 à travers le groupe de lentilles 45.

L'ellipsoïde de révolution présente deux foyers à distance finie. Les foyers du miroir ellipsoïdal 21 correspondent de préférence aux positions autour desquelles sont vues les images pupillaires 24, 40 par ce miroir. On dit que les images pupillaires 24, 40 sont conjuguées par le miroir asphérique 21.

Le miroir ellipsoïdal est complètement stigmatique. Il présente l'avantage d'assurer une bonne conjugaison de surfaces placées au voisinage de ses foyers. Sa fabrication est plus difficile que celle d'un miroir suivant la forme d'un paraboloïde, il est donc plus coûteux mais un dispositif selon l'invention comportant un miroir ellipsoïdal est globalement plus performant.

Le miroir 1 jusqu'ici le plus souvent décrit comme un miroir sphérique peut aussi bien être un miroir concave de forme proche de la sphère qui induit également une distorsion de l'image vue par l'utilisateur correspondant à une inclinaison de l'image pupillaire par rapport à l'axe optique. L'invention permet de corriger la distorsion due à un miroir concave sensiblement sphérique.

Le miroir concave sensiblement sphérique 1 hors axe peut être semi-transparent, dans ce cas les rayons lumineux émis par le paysage ou l'environnement dans le champ de vue de l'utilisateur sont transmis par ce miroir et sont reçus par la pupille de l'oeil simultanément avec les rayons réfléchis par ce même miroir et précédemment décrits. Le miroir semi-transparent est un combineur. C'est donc un combineur concave sensiblement sphérique utilisé hors axe.

Ce combineur fait de préférence partie d'une visière de protection des yeux et même du visage de l'utilisateur.

Une visière selon l'invention présente au moins une partie réfléchissante sensiblement sphérique concave hors axe.

En position d'utilisation la visière est rabattue de façon à ce que la partie correspondant au miroir concave sensiblement sphérique 1 soit placée devant l'oeil de l'utilisateur. L'ensemble du dispositif de présentation d'images collimatées peut être intégré à un casque par exemple pour un pilote d'avion ou d'hélicoptère et permet de réaliser un viseur de casque. Le dispositif peut ne présenter que des images sensiblement collimatées car dans de nombreux cas pratique il suffit de présenter des images focalisées à plusieurs mètres devant l'utilisateur.

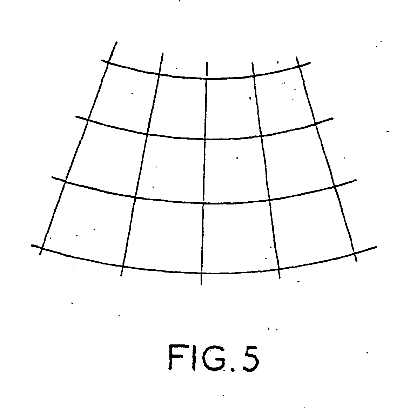

La distorsion d'une image présentant un quadrillage conduit à la déformation du quadrillage. La distorsion d'excentrement de seconde espèce qui correspond à l'aberration sphérique pupillaire induite par la réflexion sur le miroir concave sensiblement sphérique 1 hors axe, est représentée sur la figure 5, cette distorsion donne l'impression de voir le quadrillage en perspective.

Les images présentées à l'utilisateur et dont la distorsion inhérente à la visière concave sensiblement sphérique hors axe est corrigée sont particulièrement avantageuses pour un viseur de casque car elles respectent les dimensions réelles des objets représentés. Ce qui est utile lorsque le viseur présente une image superposée à la vue directe et l'est encore plus lorsque l'image présentée se substitue pour l'utilisateur à la vue directe par exemple en cas de mauvaise visibilité ou en cas de simulation précise de l'environnement. La correction de cette distorsion présente l'avantage de permettre à l'utilisateur une bonne appréciation des distances sur l'image qu'il observe et de lui permettre par exemple de piloter de nuit sans erreur de positionnement.

## Revendications

1. Dispositif optique de viseur de casque pour système de présentation d'images collimatées dans un grand champ de vue supérieur ou égal à 40 degrés, à travers la pupille de l'oeil (3) d'un utilisateur, comportant un imageur (20), un miroir concave sensiblement sphérique (1) hors axe, l'oeil (3) de l'utilisateur étant dans une position prédéterminée par l'utilisation du dispositif, l'axe (31) qui passe par le centre de la pupille de l'utilisateur et qui est normal à celle-ci fait un angle d'incidence non nul avec le miroir concave sensiblement sphérique (1), ledit axe étant une première partie (31) de l'axe optique (31, 32, 33) traversant le dispositif optique, le dispositif optique comportant un miroir concave asphérique (21) incliné sur une seconde partie de l'axe optique (32) correspondant à la réflexion de la première partie (31) de l'axe optique sur le miroir sensiblement sphérique (1), l'intersection du miroir concave asphérique (21) avec le plan d'incidence de l'axe optique étant une courbe à rayon de courbure variable le long de cette courbe la variation du rayon de courbure étant monotone, pour corriger la distorsion de l'image présentée à l'utilisateur, laquelle distorsion est due au miroir concave sensiblement sphérique hors axe (1).

2. Dispositif selon la revendication 1, **caractérisé en ce que** la courbe est une parabole ou une ellipse.

3. Dispositif selon l'une des revendications 1 à 2, **caractérisé en ce que** la surface optique du miroir asphérique (21) est supportée par un paraboloïde.

4. Dispositif selon la revendication 3, **caractérisé en ce que** la surface optique du miroir asphérique est supportée par un paraboloïde de révolution.

5. Dispositif selon l'une des revendications 1 à 2, **caractérisé en ce que** la surface optique du miroir asphérique (21) est supportée par un ellipsoïde.

6. Dispositif selon la revendication 5, **caractérisé en ce que** la surface optique du miroir asphérique (21) est supportée par un ellipsoïde de révolution.

7. Dispositif selon la revendication 4, **caractérisé en ce que** l'axe de révolution de la surface de révolution est sensiblement parallèle à la normale (25) au plan tangent de la première image pupillaire (24) que le miroir concave sensiblement sphérique (1) hors axe donne de la pupille de l'oeil (3) de l'utilisateur.

8. Dispositif selon l'une des revendications 4, 6 et 7, **caractérisé en ce que** la dispositif comporte un groupe de puissance (22, 23) placé entre les miroirs sensiblement sphérique (1) et asphérique (21) et que l'image de la pupille de l'oeil de l'utilisateur donnée par le miroir sensiblement sphérique (1) est vue par le miroir concave asphérique (21) à travers le groupe de puissance (22, 23) de façon conjuguée.

9. Dispositif selon l'une des revendications 4, 7 et 8, **caractérisé en ce que** la surface du miroir asphérique (21) est une partie d'un paraboloïde et **en ce.que** le miroir asphérique (21) voit sensiblement à l'infini la première image pupillaire (24) que le miroir concave sensiblement sphérique (1) forme de la pupille de l'utilisateur.

10. Dispositif selon l'une des revendications 6, 7 et 8, **caractérisé en ce que** lorsque la surface du miroir asphérique (21) s'appuie sur un ellipsoïde, le miroir asphérique (21) voit, au voisinage de l'un de ses foyers, la première image pupillaire (24) que le miroir concave sensiblement sphérique (1) forme de la pupille de l'utilisateur.

11. Dispositif selon l'une des revendications précédentes, **caractérisé en ce que** le miroir sensiblement sphérique (1) est semi-transparent.

## Claims

1. Helmet sight optical device for a system for presenting images collimated in a wide field of view greater than or equal to 40 degrees through the pupil of a user's eye (3), comprising an imager (20) and an off-axis substantially spherical concave mirror (1), the user's eye (3) being in a position predetermined by the use of the device, the axis (31) which passes through the centre of the user's pupil and which is normal to the latter making a non-zero angle of incidence with the substantially spherical concave mirror (1), the said axis being a first part (31) of the optical axis (31, 32, 33) passing through the optical device, the optical device comprising an aspherical concave mirror (21) inclined on a second part of the optical axis (32) corresponding to the reflection of the first part (31) of the optical axis on the substantially spherical mirror (1), the intersection of the aspherical concave mirror (21) with the plane of incidence of the optical axis being a curve with a variable radius of curvature, along this curve, the variation in the radius of curvature being monotonic, in order to correct the distortion of the image presented to the user, which distortion is due to the off-axis substantially spherical concave mirror (1).

2. Device according to Claim 1, **characterized in that** the curve is a parabola or an ellipse.

3. Device according to either of Claims 1 and 2, **characterized in that** the optical surface of the aspherical mirror (21) is supported by a paraboloid.

4. Device according to Claim 3, **characterized in that** the optical surface of the aspherical mirror is supported by a paraboloid of revolution.

5. Device according to either of Claims 1 and 2, **characterized in that** the optical surface of the aspherical mirror (21) is supported by an ellipsoid.

6. Device according to Claim 5, **characterized in that** the optical surface of the aspherical mirror (21) is supported by an ellipsoid of revolution.

7. Device according to Claim 4, **characterized in that** the axis of revolution of the surface of revolution is substantially parallel to the normal (25) to the plane tangential to the first pupil image (24) that the off-axis substantially spherical concave mirror (1) gives of the pupil of the user's eye (3).

8. Device according to one of Claims 4, 6 and 7, **characterized in that** the device comprises a power group (22, 23) placed between the substantially spherical (1) and aspherical (21) mirrors and **in that** the image of the pupil of the user's eye given by the substantially spherical mirror (1) is seen by the aspherical concave mirror (21) through the power group (22, 23) in a conjugate manner.

9. Device according to one of Claims 4, 7 and 8, **characterized in that** the surface of the aspherical mirror (21) is part of a paraboloid and **in that** the aspherical mirror (21) sees the first pupil image (24) that the substantially spherical concave mirror (1) forms of the pupil of the user, substantially at infinity.

10. Device according to one of Claims 6, 7 and 8, **characterized in that** when the surface of the aspherical mirror (21) is supported on an ellipsoid, the aspherical mirror (21) sees, in the vicinity of one of its foci, the first pupil image (24) that the substantially spherical concave mirror (1) forms of the user's pupil.

11. Device according to one of the preceding claims, **characterized in that** the substantially spherical mirror (1) is semi-transparent.

## Patentansprüche

1. Optische Vorrichtung eines Helmvisiers für ein System zur Darbietung von kollimatierten Bildern in einem großen Sichtfeld, größer als oder gleich 40 Grad, durch die Pupille des Auges (3) eines Benutzers, mit einem Bildgenerator (20) und mit einem im Wesentlichen sphärischen, achsfernen konkaven Spiegel (1), wobei das Auge (3) des Benutzers sich in einer durch die Benutzung der Vorrichtung vorgegebenen Stellung befindet, wobei die Achse (31), die durch die Mitte der Pupille des Benutzers geht und senkrecht zu dieser ist, einen Einfallwinkel ungleich Null mit dem im wesentlichen sphärischen, konkaven Spiegel (1) bildet, wobei die Achse (31) ein erster Teil der optischen Achse (31, 32, 33) ist, die die optische Vorrichtung durchquert, wobei die optische Vorrichtung einen asphärischen, konkaven Spiegel (21) aufweist, der bezüglich eines zweiten Teils der optischen Achse (32) entsprechend der Reflexion des ersten Teils (31) der optischen Achse am im Wesentlichen sphärischen Spiegel (1) geneigt ist, wobei die Schnittlinie des asphärischen, konkaven Spiegels (21) mit der Einfallebene der optischen Achse eine Kurve mit variablem Krümmungsradius ist, wobei entlang dieser Kurve die Variation des Krümmungsradius monoton ist, um die Verzerrung des dem Benutzer dargebotenen Bilds zu korrigieren, wobei die Verzerrung durch den im Wesentlichen sphärischen, achsfernen, konkaven Spiegel (1) verursacht wird.

2. Vorrichtung nach Anspruch 1, **dadurch gekennzeichnet, dass** die Kurve eine Parabel oder eine Ellipse ist.

3. Vorrichtung nach einem der Ansprüche 1 bis 2, **dadurch gekennzeichnet, dass** die optische Fläche des asphärischen Spiegels (21) von einem Paraboloid getragen wird.

4. Vorrichtung nach Anspruch 3, **dadurch gekennzeichnet, dass** die optische Fläche des asphärischen Spiegels von einem drehsymmetrischen Paraboloid getragen wird.

5. Vorrichtung nach einem der Ansprüche 1 bis 2, **dadurch gekennzeichnet, dass** die optische Fläche des asphärischen Spiegels (21) von einem Ellipsoid getragen wird.

6. Vorrichtung nach Anspruch 5, **dadurch gekennzeichnet, dass** die optische Fläche des asphärischen Spiegels (21) von einem drehsymmetrischen Ellipsoid getragen wird.

7. Vorrichtung nach Anspruch 4, **dadurch gekennzeichnet, dass** die Drehsymmetrieachse der drehsymmetrischen Fläche im Wesentlichen parallel zur senkrechten (25) zur Tangentialebene des ersten Pupillenbilds (24) verläuft, welches der im Wesentlichen sphärische, achsferne, konkave Spiegel (1) von der Pupille des Auges (3) des Benutzers gibt.

8. Vorrichtung nach einem der Ansprüche 4, 6 und 7, **dadurch gekennzeichnet, dass** die Vorrichtung eine Leistungsgruppe (22, 23) aufweist, die zwischen dem im Wesentlichen sphärischen Spiegel (1) und dem asphärischen Spiegel (21) liegt, und dass das Bild der Pupille des Auges des Benutzers, das vom im Wesentlichen sphärischen Spiegel (1) geliefert wird, vom asphärischen konkaven Spiegel (21) durch die Leistungsgruppe (22, 23) hindurch konjugiert gesehen wird.

9. Vorrichtung nach einem der Ansprüche 4, 7 und 8, **dadurch gekennzeichnet, dass** die Fläche des asphärischen Spiegels (21) Teil eines Paraboloids ist, und dass der asphärische Spiegel (21) das erste Pupillenbild (24), das der im Wesentlichen sphärische, konkave Spiegel (1) von der Pupille des Benutzers formt, im Wesentlichen im Unendlichen sieht.

10. Vorrichtung nach einem der Ansprüche 6, 7 und 8, **dadurch gekennzeichnet, dass**, wenn die Fläche des asphärischen Spiegels (21) auf einem Ellipsoid aufliegt, der asphärische Spiegel (21) in der Nähe eines seiner Brennpunkte das erste Pupillenbild (24) sieht, das der im Wesentlichen sphärische, konkave Spiegel (1) von der Pupille des Benutzers formt.

11. Vorrichtung nach einem der vorhergehenden Ansprüche, **dadurch gekennzeichnet, dass** der im Wesentlichen sphärische, konkave Spiegel (1) halbtransparent ist.
